# EUROPEAN PATENT APPLICATION

(11) **EP 3 524 333 A1**
(43) Date of publication of application: **14.08.2019**
(21) Application number: 18155478.3
(22) Date of filing: 07.02.2018
(51) Int. Cl.: B01D 46/10, B01D 46/00, B01D 46/52, B60H 3/06

(54) **PLATE FILTER ELEMENT FOR AN AIR-CONDITIONING SYSTEM OF A MOTOR VEHICLE**

(71) Applicant: Mahle International GmbH, 70376 Stuttgart (DE)
(72) Inventor: de ALMEIDA, Alexandre, 13000-000 Campinas, SP (BR); GUKELBERGER, Steffen, 70499 Stuttgart (DE); MERZ, Katharina, 70374 Stuttgart (DE); RENZ, Birgit, 71672 Marbach (DE); SINGLA, Puneet, 121006 Faridabad, Haryana (IN)
(74) Representative: BRP Renaud & Partner mbB Rechtsanwälte Patentanwälte Steuerberater

(57) **Abstract**

The present invention relates to a plate filter element (1) for an air-conditioning system of a motor vehicle or for a fresh-air system of an internal combustion engine, having a plate-shaped filter body (2) comprising a pleated filter material, which has a plurality of pleats (3) which each extend in the transverse direction (5) of the filter body (2) from one longitudinal side edge (6) to another longitudinal side edge (6) of the filter body (2), wherein two adjacent pleats (3) in each case are connected to one another by a fold (7) in which the filter material has a fold radius (15).

It is an essential feature of the invention here that the folds (7) have a greater fold radius (15) at the respective longitudinal side edge (6) than centrally between the longitudinal side edges (6).

## Description

The present invention relates to a plate filter element for an air-conditioning system of a motor vehicle or for a fresh-air system of an internal combustion engine, wherein the plate filter element has a plate-shaped filter body comprising a pleated filter material. The invention furthermore relates to a method for producing the plate filter element.

Such plate filter elements are installed in air-conditioning systems so that fresh air, which is sucked into a passenger compartment of the motor vehicle, has to flow through the plate filter element entirely before flowing into the passenger compartment. With this, impurities in the form of dust, pollen and harmful gases, for example, are filtered out by the filter material of the filter body to supply occupants in the passenger compartment with breathing air which is as clean and hygienically safe as possible.

A further application of such plate filter elements is also fresh-air systems of internal combustion engines, wherein the plate filter element here is also arranged so that the fresh air firstly flows through the plate filter element entirely before entering into the internal combustion engine. Such filtering is necessary since the dust in the air also contains quartz, amongst other things, which, together with lubricating oils used in the internal combustion engine, would form an abrasive material which leads to increased wear on the internal combustion engine.

Due to the pleated filter material, the surface of the filter material is increased to reduce the flow resistance for the sucked-in fresh air as it flows through the plate filter element. Owing to this pleating of the filter material, however, such plate filter elements have a lower stiffness with regard to bending. An initial increase in the stiffness and fixing of the pleating is effected by attaching side strips to the plate-shaped filter body.

Although DE 10 2007 057 384 A1 discloses a plate filter element having a pleated filter material, in which the side strips have a zigzag-shaped contour to provide a particularly flexible plate filter element, it is generally desirable to increase the stiffness with regard to bending. In particular, filter bodies comprising a single-layer filter material have a particularly low stiffness and can collapse under the inflow of the sucked-in fresh air. Therefore, adhesive beads, in particular glue beads, are conventionally applied to the pleats or the filter material for additional stiffening of the plate filter element.

The problem when using such adhesive beads for stiffening the filter material is that the adhesive outgasses. With this, gases escape over time from the adhesive, for which it is necessary to observe legally specified emission thresholds, in particular with respect to passenger compartments. The stiffening of the filter material by means of adhesive beads is therefore only possible within limits.

The present invention is based on the object of providing an embodiment of a plate filter element of the type described at the outset, which, without the use of adhesive beads, also has an increased stiffness with regard to bending and can be produced more simply and economically.

This problem is solved according to the invention by the subject matter of the independent claim. Advantageous embodiments are the subject matter of the dependent claims.

The present invention is based on the general idea that the fold radius varies along an extent of at least one fold in which the filter material has a fold radius.

The plate filter element according to the invention has a plate-shaped filter body comprising a pleated filter material, which has a plurality of pleats. Such plate filter elements are preferably inserted in a housing of a filter, wherein the housing has a raw-air inlet and a clean-air outlet, wherein the plate filter element is arranged in the housing between the raw-air inlet and the clean-air outlet and separates these fluidically from one another so that fresh air travels from the raw-air inlet to the clean-air outlet substantially only through the filter material. In this installed position in the housing, the plate filter element has an inflow side at the raw-air side and an outflow side at the clean-air side.

The term "plate-shaped" describes a substantially cuboidal surrounding contour, which surrounds the filter body and is defined by the outer edges of the filter material. A plate-shaped filter body of this type extends in a plate plane, which is defined by a longitudinal direction and a transverse direction of the filter body. Within the plate plane, the filter body preferably has a rectangular cross-section.

The pleats of the plate-shaped filter body lie adjacent to one another in the longitudinal direction of the filter body and extend in the transverse direction of the filter body from one longitudinal side edge to another longitudinal side edge of the filter body. Two adjacent pleats in each case are connected to one another here by a fold in which the filter material has a fold radius, wherein a pleat pocket is formed in each case between two adjacent pleats. Pleat pockets at the inflow side are open at an inflow side of the plate filter element and closed by a fold at an outflow side of the plate filter element. Conversely, pleat pockets at the outflow side are open at the outflow side and closed by a fold at the inflow side. The compactness of the pleats or the spatial volume which delimits the pleat pockets can be altered by compressing or stretching the filter body in the longitudinal direction and can thus be adapted to the specified edge conditions in each case.

Fastened to each longitudinal side edge of the filter body is a respective side strip, which is separate from the pleated filter material and delimits the pleat pockets at the inflow side and/or the pleat pockets at the outflow side laterally. The respective side strip here is used for stabilising the pleat pockets and therefore preferably has a rectangular contour with longitudinal edges and narrow edges, wherein the longitudinal edges extend substantially parallel to the longitudinal direction of the filter body.

Since it is provided according to the invention that, at the inflow side and/or at the outflow side, the folds have a greater fold radius at the respective longitudinal side edge than centrally between the longitudinal side edges, the plate filter element has a greater stiffness with regard to bending. This increased stiffness without the use of adhesive beads is achieved in that a curved progression of the filter material with a curved face is formed as a result of the greater fold radius in the region of the longitudinal side edges. As a result of each curved face formed at the inflow side, the compressive stress acting on the filter material as a result of the inflowing fresh air is distributed more evenly and prevents the pleat pockets from collapsing. Each curved face formed at the outflow side leads to a further improvement in the stiffness of the plate filter element. By not applying adhesive beads, the manufacture of a plate filter element according to the invention is simplified, wherein the production costs are additionally reduced since at least one production step can be avoided. Since no adhesive is used, air pollution caused by the outgassing of an adhesive is also prevented. In addition, less material is required for production of the filter body. The recycling of the filter body is also simplified, as only one material is used, so that a laborious separation of an adhesive from the filter body is not required.

In an advantageous further development of the solution according to the invention, it is provided that the fold radius at the respective fold decreases continuously from the respective longitudinal side edge in the direction of a longitudinal centre of the filter body, which is located centrally between the longitudinal side edges. As a result of this continuous change in the fold radius, it is ensured that the respective fold does not have any deformations in the form of kinks which can contribute to an uneven compressive stress behaviour and therefore to the collapse of the pleat pockets. It can preferably be provided that the continuous progression of the fold radius from the respective longitudinal side edge to the longitudinal centre has a linear and/or quadratic correlation between the spacing from the longitudinal side edge and the fold radius.

In a further advantageous embodiment of the solution according to the invention, the filter body has two side regions which each have one of the longitudinal side edges, and a centre region, which connects the two side regions to one another and which has a longitudinal centre of the filter body, which is arranged centrally between the two longitudinal side edges, wherein the fold radius at the respective fold in the respective side region decreases from the longitudinal side edge in the direction of the centre region and is constant in the centre region. The production of such a filter body is thus simplified since the variation in the fold radius only has to be generated in the side regions. It can also preferably be provided here that the progression of the fold radius from the respective longitudinal side edge to the centre region has a linear and/or quadratic correlation between the spacing from the longitudinal side edge and the fold radius.

In an advantageous further development of the solution according to the invention, it is provided that the fold radius varies in the transverse direction of the filter body only at the folds of the inflow side. A sufficient increase in the stiffness with regard to bending is thus achieved, whilst the production steps, and consequently the production costs, are at the same time reduced to a minimum.

In a further advantageous embodiment of the solution according to the invention, it is provided that the fold radius varies in the transverse direction of the filter body at the folds of the inflow side and at the folds of the outflow side in order to achieve particularly high stiffness with regard to bending.

In an advantageous further development of the solution according to the invention, it is provided that the fold radius at the respective fold at the longitudinal side edge is at least twice or at least five times or at least ten times greater than centrally between the longitudinal side edges. As a result of these dimensions of the fold radius at the longitudinal side edge, a stiffness with regard to bending is achieved on the one hand, which is otherwise only possible through the use of adhesive beads. On the other hand, the stiffness is moreover increased to such an extent that the throughput of fresh air through the plate filter element can be increased without the filter pockets collapsing.

The invention furthermore relates to a method for producing a plate filter element according to the invention, in which, before the fastening of the side strips, the pleated filter material is compressed, at least in the region of the longitudinal side edges, in a through-flow direction of the filter body which extends perpendicularly to the longitudinal direction of the filter body and perpendicularly to the transverse direction of the filter body. The change in the fold radius is realised here through the application of pressure which can be applied by rollers or pads. The desired fold radius of the filter material here can be specified by varying the pressure.

Irrespective of whether it is only the pleated filter material in the region of the longitudinal side edges or the entire filter material which is compressed, the side strips are attached whilst the pressure still acts on the filter material so that the specified fold radius of the filter material is fixed in the region of the longitudinal side edges. After the pressure is removed, the filter material springs back at least in the centre region of the filter body, whereby the fold radius decreases again.

In a further advantageous embodiment of the solution according to the invention, it is provided that the respective side strip is fastened to the filter material by welding. If the filter material and/or the respective side strip is manufactured from plastics material, ultrasound welding is preferably provided as the method for fastening the respective side strip to the filter material since it is thus possible to achieve short welding times and therefore to attain greater cost effectiveness of the production process.

In an advantageous further development of the solution according to the invention, it is provided that the respective side strip is fastened to the filter material by plasticisation. It can be provided here that either the filter material and/or the respective side strip is heated until a plastic state of the respective material is established. A material-locking connection is produced by pressing the side strip against the filter material and then cooling the material and/or the respective side strip. This is advantageous for example in that the purchase costs for an ultrasound welding system are eliminated and the production costs of the plate filter element are further reduced.

The attachment of the respective side strip both by welding and also by plasticisation has the advantage that a material-locking connection is produced between the filter material and the respective side strip, which is impervious to the sucked-in fresh air so that this is forced to flow entirely through the filter material. The flow can essentially also pass through the respective side strip if it is made from the same filter material or another filter material.

In a further advantageous embodiment of the solution according to the invention, it is provided that the respective side strip is fastened to the filter material by glueing. This provides a particularly simple and cost-effective way of manufacturing the plate filter element.

Further important features and advantages of the invention are revealed in the subclaims, in the drawings and in the associated description of the figures with reference to the drawings.

It goes without saying that the above-mentioned features and the features still to be explained below can be applied not only in the combinations indicated in each case but also in other combinations or alone, without deviating from the scope of the present invention.

Preferred exemplary embodiments of the invention are illustrated in the drawings and will be explained in more detail in the description below, wherein identical reference signs denote identical or similar or functionally identical components.

The figures show, in each case schematically:
- Fig. 1: a perspective illustration of the plate filter element according to the invention;
- Fig. 2: an enlarged partial detail of the plate filter element illustrated in Fig. 1.

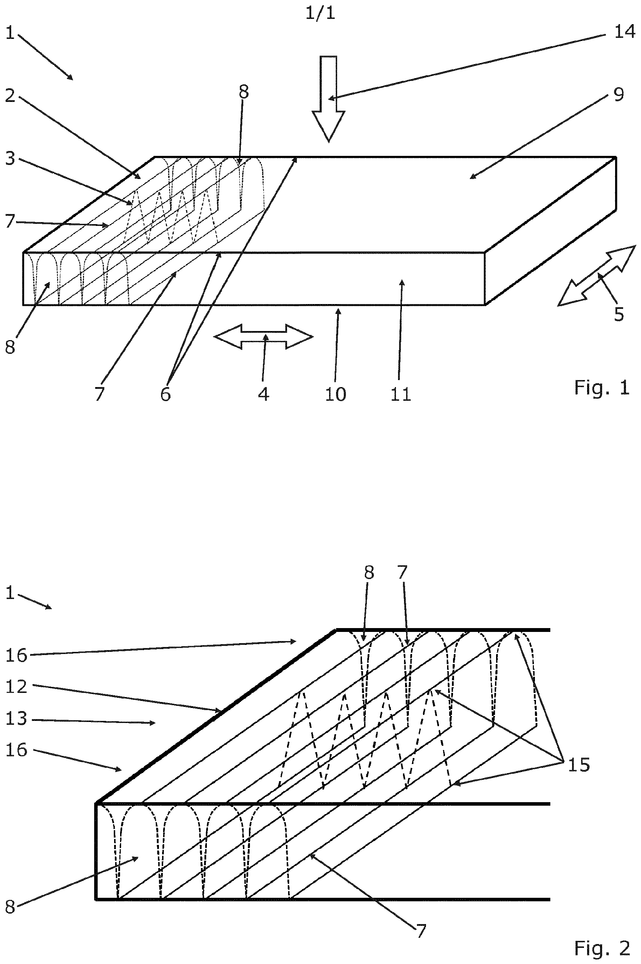

As illustrated in Fig. 1, a plate filter element 1 according to the invention has a plate-shaped filter body 2 comprising a pleated filter material which forms a plurality of pleats 3 in the pleated state. The filter material can have one or more material layers arranged on top of one another, wherein a single material layer can be manufactured for example from plastics material, cellulose, microfibers or active carbon, depending on the area of use. In single-layer filter materials, the use of a stabilised carrier layer is naturally not possible, which means that, in this case, the pleated filter material has a lower resistance with regard to bending.

In Figs. 1 and 2, the plate-shaped filter body 2 is enclosed by an imaginary surrounding contour which is cuboidal and is defined by the outer edges of the filter material. In Figs. 1 and 2, this surrounding contour is illustrated by lines with a bolder line width. The filter body 2 extends in a plate plane which is defined by a longitudinal direction 4 and a transverse direction 5 of the filter body 2. Within the plate plane, the filter body 2 preferably has a rectangular cross-section.

The plate filter element 1 can be inserted in a housing (not illustrated), wherein this housing has a raw-air inlet and a clean-air outlet. Sucked-in fresh airflows into the housing via the raw-air inlet and is supplied either to a passenger compartment or an internal combustion engine via the clean-air outlet. The plate filter element 1 in the housing is arranged here so that it separates the raw-air inlet and the clean-air outlet fluidically from one another. Sucked-in fresh air flows along a through-flow direction 14 into the filter body 2 via a inflow side 9 at the raw-air side and back out of the filter body 2 via an outflow side 10 at the clean-air side, wherein the through-flow direction 14 is aligned substantially perpendicularly to the longitudinal direction 4 and perpendicularly to the transverse direction 5 of the filter body 2.

The pleats 3 are arranged adjacent to one another in the longitudinal direction 4 and extend in each case in the transverse direction 5 from one longitudinal side edge 6 of the filter body 2 to the other longitudinal side edge 6 of the filter body 2. At both longitudinal side edges 6, a respective side strip 11 is attached to the filter body 2 and thus delimits the pleats 3 in the transverse direction 5. The respective side strip 11 serves for stabilising the pleating of the filter material and therefore preferably has a rectangular contour with longitudinal edges and narrow edges, wherein at least one of the longitudinal edges coincides with a longitudinal side edge 6. Instead of two separate side strips 11 which each extend only along the respective longitudinal side edge 6, it is also possible to provide strip tape which extends along both longitudinal side edges 6 by means of two longitudinal portions which each form a side strip 11 and along at least one end-face edge of the filter body 2 by means of at least one further longitudinal portion.

Two adjacent pleats 3 in each case are connected by a fold 7 in which the filter material has a fold radius 15. Two folds 7 which are directly adjacent along the filter material are arranged here so that one of the adjacent folds 7 lies along the inflow side 9 and the other lies along the outflow side 10. Two pleats 3 which are adjacent in the longitudinal direction 4 at the inflow side 9 or at the outflow side 10 in each case form a pleat pocket 8, wherein pleat pockets 8 at the inflow side are open at the inflow side 9 and closed by a fold 7 at the outflow side 10. Conversely, pleat pockets 8 at the outflow side are open at the outflow side 10 and closed by a fold 7 at the inflow side 9. As seen in the transverse direction 5, the pleat pockets 8 are terminated by the respective side strips 11.

The spacing between two adjacent pleats 3 in each case can be altered by compressing or stretching the filter material in the longitudinal direction 4. The spatial volume delimited by the pleat pockets 8 can thus be reduced to provide a greater surface of the filter material with pre-determined dimensions of the filter body 2 and to minimise the flow resistance for the fresh air flowing through.

Observation of Fig. 2 reveals that the filter body 2 can be divided along the transverse direction 5 into two side regions 16 and a centre region 13, wherein the centre region 13 is arranged between the two side regions 16. The respective side region 16 comprises the respective longitudinal side edge 6 and the respective side strip 11. The centre region 13 has a longitudinal centre 12 which lies substantially centrally between the two longitudinal side edges 6.

It is also revealed particularly clearly in Fig. 2 that the fold radius 15 of each fold 7 varies along the extent in the transverse direction 5, wherein, in this particular embodiment, the fold radius 15 is smaller in the centre region 13 than in the two side regions 16. In a plane which is defined by the longitudinal direction 4 and the through-flow direction 14 and passes through the centre region 13, the pleated filter material describes a substantially zigzag-shaped contour owing to the small fold radius 15 of each fold 7. In a further plane, which is also defined by the longitudinal direction 4 and the through-flow direction 14 but passes through one of the two side regions 16, the pleated filter material, owing to the greater fold radius 15, describes a curved progression with a curved face which merges into two curved supports. The curved face here is arranged at the inflow side 9 and has a convex form of the filter material in the through-flow direction 14. The two curved supports extend from the curved face and each lead into one of the two directly adjacent folds 7 arranged on the outflow side 10. As a result of each curved face formed in the respective side region 16 on the inflow side 10, the compressive stress, which acts on the filter material owing to the inflowing fresh air, is distributed more evenly and prevents the pleat pockets 8 from collapsing.

In the examples of Figs. 1 and 2, only the folds 7 lying at the inflow side 9 are provided with a fold radius 15 which varies in the transverse direction 5. It is likewise possible to provide only the folds 7 lying at the outflow side 10 with a fold radius 15 which varies in the transverse direction 5. However, an embodiment is preferred in which the folds 7 at the inflow side 9 and the folds 7 at the outflow side 10 are each provided with varying fold radii 15.

The plate filter element 1 in this embodiment can be manufactured in that the filter material is firstly pleated and a filter body 2 is produced, wherein the fold radius 15 is still substantially constant along each fold 7. In this state, the filter body 2 can be compressed either entirely or only in the side regions 16 through the application of a force which acts substantially parallel to the through-flow direction 14, so that the fold radius 15 is increased. In the next step, the side strips 11 are placed against the filter body 2.

In the event that the folds 7 are only intended to maintain varying fold radii 15 at the inflow side 9, the respective side strip 11 is only partially fastened to the filter body 2, in the region of the inflow side 9. By removing the force, the filter body 2 relaxes and expands to a certain extent parallel to the through-flow direction 14, wherein the fold radius 15 of the folds 7 which are not yet fastened to the side strip 11 is reduced at the outflow side 10. The fold radius 15 of the folds 7 which are arranged in the centre region 13 is moreover decreased at both the inflow side 9 and the outflow side 10. As a subsequent method step, it can be provided that the respective side strip 11 is fastened to the folds 7 arranged at the outflow side 10.

In the event that the folds 7 are only intended to maintain varying fold radii 15 at the outflow side 10, the respective side strip 11 is only partially fastened to the filter body 2, in the region of the outflow side 10. By removing the force, the filter body 2 relaxes and expands to a certain extent parallel to the through-flow direction 14, wherein the fold radius 15 of the folds 7 which are not yet fastened to the side strip 11 is reduced at the inflow side 9. The fold radius 15 of the folds 7 which are arranged in the centre region 13 is moreover decreased at both the inflow side 9 and the outflow side 10. As a subsequent method step, it can be provided that the respective side strip 11 is fastened to the folds 7 arranged at the outflow side 9.

In the event that the folds 7 are intended to maintain varying fold radii 15 at both the inflow side 9 and the outflow side 10, the respective side strip 11 is fastened to the filter body 2 entirely at the respective longitudinal side edge 6. By removing the force, the filter body 2 relaxes and expands to a certain extent parallel to the through-flow direction 14, wherein the fold radius 15 outside the side strips 11 is reduced. The fold radius 15 of the folds 7 which are arranged in the centre region 13 is thus decreased at both the inflow side 9 and the outflow side 10.

As a result of these method steps, a continuous progression of the fold radius 7 from the centre region 13 to the respective longitudinal side edge 6 is achieved, wherein no kinks in the pleat pockets 8 are produced which would decrease the stiffness of the filter body 2 with regard to bending and/or collapsing.

## Claims

1. Plate filter element (1) for an air-conditioning system of a motor vehicle or for a fresh-air system of an internal combustion engine,
- having a plate-shaped filter body (2) comprising a pleated filter material, which has a plurality of pleats (3) which lie adjacent to one another in the longitudinal direction (4) of the filter body (2) and which each extend in the transverse direction (5) of the filter body (2) from one longitudinal side edge (6) of the filter body (2) to the other longitudinal side edge (6) of the filter body (2),
- wherein two adjacent pleats (3) in each case are connected to one another by a fold (7) in which the filter material has a fold radius (15),
- wherein a pleat pocket (8) is formed in each case between two adjacent pleats (3),
- wherein pleat pockets (8) at the inflow side are open at an inflow side (9) of the plate filter element (1) and are closed by a fold (7) at an outflow side (10) of the plate filter element (1),
- wherein pleat pockets (8) at the outflow side are open at the outflow side (10) of the plate filter element (1) and are closed by a fold (7) at the inflow side (9) of the plate filter element (1),
- wherein, at each longitudinal side edge (6), a side strip (11) is fastened to the filter body (2), which is separate from the filter body (2) and delimits the pleat pockets (8) at the inflow side and/or the pleat pockets (8) at the outflow side laterally,
**characterized in that**,
- at the inflow side (9) and/or at the outflow side (10), the folds (7) have a greater fold radius (15) at the respective longitudinal side edge (6) than centrally between the longitudinal side edges (6).

2. Plate filter element according to Claim 1,
**characterized in that**
the fold radius (15) at the respective fold (7) decreases continuously from the respective longitudinal side edge (6) in the direction of a longitudinal centre (12) of the filter body (2), which is located centrally between the longitudinal side edges (6).

3. Plate filter element according to Claim 1 or 2,
**characterized in that**
- the filter body (2) has two side regions (16), which each have one of the longitudinal side edges (6), and a centre region (13), which connects the two side regions (16) to one another and which has a longitudinal centre (12) of the filter body (2), which is arranged centrally between the two longitudinal side edges (6),
- wherein the fold radius (15) at the respective fold (7) in the respective side region (16) decreases from the longitudinal side edge (6) in the direction of the centre region (13) and is constant in the centre region (13).

4. Plate filter element according to one of Claims 1 to 3,
**characterized in that**
the fold radius (15) varies in the transverse direction (5) of the filter body (2) only at the folds (7) of the inflow side (9).

5. Plate filter element according to one of Claims 1 to 3,
**characterized in that**
the fold radius (15) varies in the transverse direction (5) of the filter body (2) at the folds (7) of the inflow side (9) and at the folds (7) of the outflow side (10).

6. Plate filter element according to one of Claims 1 to 5,
**characterized in that**
the fold radius (15) at the respective fold (7) is at least twice or at least five times or at least ten times greater at the longitudinal side edge (6) than centrally between the longitudinal side edges (6).

7. Method for producing a plate filter element (1) according to one of the preceding claims, in which, before the fastening of the side strips (11), the pleated filter material is compressed, at least in the region of the longitudinal side edges (6), in a through-flow direction (14) of the filter body (2) which extends perpendicularly to the longitudinal direction (4) of the filter body (2) and perpendicularly to the transverse direction (5) of the filter body (2).

8. Method according to Claim 7,
**characterized in that**,
the respective side strips (11) are fastened to the filter material by welding.

9. Method according to Claim 7,
**characterized in that**
the respective side strips (11) are fastened to the filter material by plasticisation.

10. Method according to Claim 7,
**characterized in that**
the respective side strips (11) are fastened to the filter material by glueing.
